# EUROPÄISCHE PATENTSCHRIFT

(11) **EP 1 037 474 B1**
(45) Veröffentlichungstag und Bekanntmachung des Hinweises auf die Patenterteilung: **12.12.2007**
(21) Anmeldenummer: 00100408.4
(22) Anmeldetag: 08.01.2000
(51) Int. Cl.: H04Q 1/10, H05K 7/14

(54) **Elektronisches Gerät, insbesondere Fermeldevermittlungsanlage**
Electronic assembly especially telecommunication exchange
Appareil électronique, en particulier un central téléphonique

(30) Priorität: 11.03.1999 DE 19910988
(43) Veröffentlichungstag der Anmeldung: 20.09.2000
(73) Patentinhaber: Tenovis GmbH & Co. KG, 60362 Frankfurt am Main (DE)
(72) Erfinder: Kraemer, Dieter, 65510 Idstein (DE); Lauer, Walter, 65929 Frankfurt (DE); Ogorczyk, Bernd, 61184 Karben (DE); Beck, Werner, 64287 Darmstadt (DE)
(74) Vertreter: Tergau & Pohl Patentanwälte

(56) Entgegenhaltungen:
- DE-A- 4 039 502
- DE-A- 4 132 917
- DE-A- 4 447 183
- GB-A- 2 190 564

## Beschreibung

### Stand der Technik

Die Erfindung betrifft ein elektronisches Gerät, insbesondere eine Fernmeldevermittlungsanlage, mit den im Oberbegriff des Anspruchs 1 angegebenen Merkmalen.

Ein derartiges elektronisches Gerät ist beispielsweise aus der Druckschrift DE 44 47 183 A1 bekannt. Die dort gezeigte Fernmeldevermittlungsanlage besteht aus mehreren elektronischen Modulbaugruppen, welche mit allen für ihre jeweilige Einzelfunktionalität benötigten Einrichtungen versehen sind, wie beispielsweise Anschlußleitungs- und Verbindungsleitungsschaltungen und zugehörige Steuereinrichtungen. Die Elektronikmodule sind jeweils in einem geschlossenen Modulgehäuse angeordnet und über ein Steckerteil der Modulbaugruppe an eine gemeinsame Verbindungsleiterplatte anschließbar. Die Verbindungsleiterplatte und die Modulgehäuse sind zusammen in einem Metallgehäuse angeordnet, welches eine Grundplatte zur Festlegung von Verbindungsleiterplatte und Modulgehäusen sowie eine auf die Grundplatte aufgesetzte Metallkappe umfaßt. Als nachteilig ist dabei anzusehen, daß ein Austausch oder Neueinbau von Modulbaugruppen handwerklich aufwendig ist, ein umständliches Öffnen der Anlage und zahlreiche Handgriffe erforderlich macht und daher von ungeschultem Personal nur schwer vorgenommen werden kann. Außerdem ist die Herstellung und Montage der Anlage durch die aufwendige Ausgestaltung der Grundplatte mit mechanischen Aufnahmen für die Modulbaugruppen und Kabelstränge relativ kompliziert und teuer. Weiterhin sind die räumlichen Abmessungen der Anlage relativ groß.

Aus der GB 2 190 564 A ist außerdem ein Kommunikationssystem mit einem Gehäuse bekannt, welches im Frontbereich mehrere Schlitze zur Aufnahme jeweils einer Modulbaugruppe aufweist. Die Modulgehäuse der Modulbaugruppen werden quasi wie Schubladen in das Gehäuse der Anlage eingeschoben. Anschließend wird eine Abdeckkappe auf das Basisgehäuse aufgesetzt. Nachteilig dabei ist, daß die Anlage relativ groß dimenioniert ist, da für die Unterbringung der länglichen Aufnahmeschlitze und Kontaktvorrichtungen im Basisgehäuse sehr viel Platz benötigt wird. Darüber hinaus werden durch den komplizierten Aufbau des Basisgehäuses mit mehreren Aufnahmefächern und einer zusätzlichen Abdeckung die Herstellungskosten erhöht.

### Vorteile der Erfindung

Durch das elektronische Gerät mit den kennzeichnenden Merkmalen des Anspruchs 1, werden die bekannten Nachteile des standes der Technik vermieden. Dadurch, daß die Verbindungsleiterplatte in einem Basisgehäuse angeordnet ist und die Modulgehäuse der Modulbaugruppen außerhalb des Basisgehäuses an einer Frontwand des Basisgehäuses festlegbar sind, wobei die Frontwand Ausnehmungen zur Durchführung jeweils einer Kontaktierungsvorrichtung für den Anschluß der Modulbaugruppen an die gemeinsame Verbindungsleiterplatte aufweist, können die Modulbaugruppen in sehr einfacher Weise ohne zusätzliche Werkzeuge an dem Basisgehäuse lösbar befestigt werden. Für den Benutzer ist damit ein Auf- oder Umbau beziehungsweise eine Erweiterung des Gerätes und eine Anpassung an das jeweilige Anforderungsprofil mit wenigen einfachen Handgriffen zu realisieren. So ist es beispielsweise bei einer Fernmeldevermittlungsanlage möglich, durch einfaches Aufstecken der Modulbaugruppen auf das Basisgehäuse, die Anlage so zu erweitern, daß zusätzliche Teilnehmer oder Amtsleitungen an die Anlage angeschlossen werden können. Weiterhin besteht die Möglichkeit, durch Anordnung weiterer Modulbaugruppen die Benutzung eines Sprachspeichers, Türöffners, Schaltkontaktes und anderer Einrichtungen zu ermöglichen. Das modulartig aufgebaute elektronische Gerät ist äußerst klein und kompakt herstellbar und daher vielseitig und platzsparend verwendbar. Durch die räumliche Teilung des Gerätes in ein Basisgehäuse und mehrere auf das Basisgehäuse aufgesetzte Modulgehäuse sind die Modulbaugruppen für den Benutzer sofort zugänglich, ohne daß Abdeckungsteile entfernt werden müssen. Die Anlage besteht aus wenigen Teilen die mit geringen Aufwand und niedrigen Herstellungskosten zu fertigen sind und in einfacher Weise zusammengebaut werden können.

Weiterbildungen der Erfindung und vorteilhafte Ausgestaltungen werden durch die in den Unteransprüchen angegebenen Merkmale ermöglicht.

Vorteilhaft besteht jede Kontaktierungsvorrichtung aus wenigstens einem an der Rückseite der Modulgehäuse angeordnetem Steckerteil und jeweils einen mit der Verbindungsleiterplatte elektrisch verbundenen Gegenstecker, wobei das Stekkerteil in einer senkrecht zur Frontwand verlaufenden Steckrichtung mit dem Gegenstecker kontaktierbar ist. Die mechanische Konstruktion des Basisgehäuses wird besonders einfach und preisgünstig herstellbar, wenn die Gegenstecker unmittelbar auf der Verbindungsleiterplatte angeordnet sind. In einem Ausführungsbeispiel ist vorgesehen, daß durch Einstekken des wenigstens einen Steckerteils in einen Gegenstecker der Verbindungleiterplatte die Modulgehäuse vorteilhaft sowohl elektrisch mit der Verbindungsleiterplatte kontaktiert als auch gleichzeitig mechanisch an der Frontwand des Basisgehäuses festgelegt werden.

Darüber hinaus können weitere lösbare Befestigungsmittel zur Festlegung und Sicherung der Modulgehäuse an der Frontwand vorgesehen sein, die als Schraubmittel oder Rastmittel ausgestaltet sind, wodurch die Modulgehäuse gegen ein versehentliches Ablösen vom Basisgehäuse geschützt sind.

Besonders vorteilhaft ist, wenn die weiteren lösbaren Befestigungsmittel wenigstens ein unterhalb des wenigstens einen Steckerteils an dem Modulgehäuse angeordnetes Hakenteil umfassen, welches von der Rückseite des Modulgehäuses absteht und in einen Durchbruch der Frontwand des Basisgehäuses unter Bildung eines Schwenklagers einsetzbar ist. Die Modulgehäuse werden zunächst mit dem Hakenteil in den Durchbruch eingesetzt und anschließend mit der Rückseite zur Frontwand geschwenkt, bis das Steckerteil des Modulgehäuses den Gegenstecker der Verbindungsleiterplatte kontaktiert. Durch das Schwenklager wird das Steckerteil beim Aufstecken auf den Gegenstecker quasi geführt und das Einstecken in den jeweiligen Gegenstecker erleichtert.

Als weiteres lösbares Befestigungsmittel kann ein dem Hakenteil in bezug auf das Steckerteil gegenüberliegender elastisch federnder Rasthaken an dem Modulgehäuse oberhalb des wenigstens einen Steckerteils vorgesehen sein, der von der Rückseite des Modulgehäuses absteht und beim Einstecken des Steckerteils in den Gegenstecker einen Durchbruch der Frontwand rastend hintergreift. Ein Ablösen der Modulgehäuse kann dann in einfacher Weise durch Lösen des Rasthakens und Zurückschwenken der Modulgehäuse erreicht werden.

Besonders platzsparend ist es, wenn eine Außenseite der Frontwand des Basisgehäuses als ebene Fläche ausgestaltet ist und die Modulgehäuse seitlich aneinandergereiht und direkt nebeneinander benachbart an der Außenseite festlegbar sind. Durch diese Maßnahme wird erreicht, daß zwischen den Modulgehäusen kein ungenutzter Raum verbleibt.

Weiterhin ist vorteilhaft, wenn die Außenseite der Frontwand in mehrere seitlich aneinandergereihte Aufnahmebereiche mit gleichen räumlichen Abmessungen unterteilt ist, wobei jeder Aufnahmebereich wenigstens eine Ausnehmung aufweist. Es können dann sowohl solche Modulgehäuse, deren Breite der Breite eines Aufnahmebereiches entspricht, als auch solche Module deren Breite der Breite von zwei oder mehr benachbarten Aufnahmebereichen entspricht an der Außenseite der Frontwand festgelegt werden. Die Anlage läßt sich dadurch optimal an das jeweilige Anforderungprofil anpassen. Damit die Anlage unabhängig von der Anzahl der Module für den Betrachter immer ein einheitliches Erscheinungsbild bietet, kann an nicht mit einem Modulgehäuse belegten Aufnahmebereichen der Frontwand des Basisgehäuses ein Leergehäuse angeordnet werden, dessen äußerer Aufbau dem Aufbau eines Modulgehäuses entspricht.

Das die Verbindungsleiterplatte beinhaltende Basisgehäuse kann einfach und preisgünstig aus einem an einer Wand befestigbaren Bodenteil und einem mit dem Bodenteil verbundenen Frontteil bestehen. Zur Verbesserung der EMV-Eigenschaften (Elektromagnetische Verträglichkeit) ist das Bodenteil aus Metall, vorzugsweise als einfaches Stanzbiegeteil aus Blech gefertigt. Das Frontteil kann preisgünstig als Kunststoffteil, insbesondere als Spritzgußteil gefertigt werden.

Vorteilhaft ist ein Masseanschluß der Verbindungsleiterplatte mit dem metallischen Bodenteil elektrisch leitend verbunden. Eine bessere EMV-Verträglichkeit des Gerätes wird erreicht, wenn zwei mit dem Bodenteil elektrisch verbundene Masseanschüsse an sich gegenüberliegenden Abschnitten der Verbindungsleiterplatte angeordnet sind. Ein noch besserer EMV-Schutz kann erreicht werden, wenn wenigstens vier in den Eckbereichen der Verbindungsleiterplatte angeordnete Masseanschlüsse mit dem Bodenteil elektrisch verbunden sind.

Die EMV-Eigenschaften des Gerätes können noch dadurch verbessert werden, daß das Bodenteil einstückig als wannenförmiges Stanzbiegeteil mit einer rechteckförmigen Bodenwand und vier von der Bodenwand zum Frontteil hin abstehenden Seitenwänden ausgebildet ist.

Das Frontteil kann einstückig als eine auf das Bodenteil aufsetzbare, wannenförmige Kunststoffkappe ausgebildet sein. Der Zusammenbau des Basisgehäuses ist dann mit wenigen Handgriffen möglich, beispielsweise kann die Kunststoffkappe mit an dem metallischen Bodenteil ausgebildeten Rastnasen auf das Bodenteil aufgeklipst werden.

Die Modulgehäuse können als geschlossene Gehäuse ausgebildet werden. Besonders vorteilhaft und materialsparend ist es, die Modulgehäuse als wannenförmige Kunststoffteile mit einer offenen Rückseite auszugestalten. Die Fertigung der Modulgehäuse wird durch diese Maßnahme stark erleichtert, da die Modulgehäuse einstückig und im Spritzgußwerkzeug gefertigt werden können.

Vorteilhaft ist an der unteren Wand der Modulgehäuse wenigstens eine Kontakteinrichtung zum Anschluß externer Kabelverbindungen, beispielsweise Anschlußleitungen der Teilnehmer oder Verbindungsleitungen vorgesehen.

Wenn die Modulgehäuse an der Rückseite offen sind und die Frontkappe aus Kunststoff gefertigt ist, kann ein wirksamer ESD-Schutz (Electrostatic Discharging) vorteilhaft dadurch erreicht werde, daß das Basisgehäuse mit ESD-Schutzblechen versehen ist, welche sich im äußeren Randbereich der Frontwand des Basisgehäuses von der den Modulbaugruppen abgewandten Seite der Frontwand aus mindestens bis zur Außenseite der Frontwand erstrecken.

Vorteilhaft können die ESD-Schutzbleche durch zwei sich gegenüberliegende Seitenwände des metallischen Bodenteils gebildet werden, wobei die von der Bodenwand abgewandten Enden der wenigstens zwei Seitenwände mit Stegen versehen sind, die im Randbereich der Frontwand durch Öffnungen des Frontteils wenigstens bis zur Außenseite der Frontwand hindurchgeführt sind.

Der Aufwand bei der Herstellung der Modulgehäuse kann dadurch erleichtert werden, daß im Innenraum der wannenförmigen Modulgehäuse eine mit dem wenigstens einen Steckerteil elektrisch und mechanisch verbundene und mit elektrischen/elektronischen Bauelementen bestückte Modulleiterplatte angeordnet ist, wobei wenigstens ein senkrecht von der Vorderwand der wannenförmigen Modulgehäuse in den Innenraum der Modulgehäuse abstehender Vorsprung vorgesehen ist, an welchem das wenigstens eine Steckerteil festgelegt ist. Vorteilhaft wird durch diese Maßnahme bei der Festlegung des Steckerteils gleichzeitig die Modulleiterplatte im Modulgehäuse befestigt. Außerdem wird verhindert, daß beim Abziehen der Modulgehäuse von den Gegensteckern der Verbindungsleiterplatte die elektrische Verbindung zwischen Steckerteil und Modulleiterplatte mechanisch belastet wird.

Die Modulgehäuse können besonders klein ausgestaltet werden, wenn der wenigstens eine Vorsprung einen Durchbruch der Modulleiterplatte durchgreift. Das wenigstens eine Steckerteil kann vorteilhaft mit schraubbaren Verbindungsmitteln an dem wenigstens einen Vorsprung befestigt werden.

Als weitere Maßnahme kann vorgesehen sein, an den Seitenwänden der Modulgehäuse wechselseitig versetzte Noppen auszubilden, welche beim seitlichen Aneinanderreihen der Modulgehäuse an der Seitenwand eines unmittelbar benachbarten Modulgehäuses zur Anlage gelangen, wodurch sich die Seitenwände der Modulgehäuse spielfrei und rüttelsicher berühren. Die mechanische Stabilität der Seitenwände der offenen Modulgehäuse kann durch in die Seitenwände eingebrachte Nuten vergrößert werden, welche sich parallel zur Rückseite der Modulgehäuse erstrecken.

Vorteilhaft kann an wenigstens einer Seitenwand der Kunststoffkappe wenigstens ein Vorsprung und/oder eine Vertiefung ausgebildet sein, welche mit einer entsprechend ausgebildeten Vertiefung und/oder einem Vorsprung eines weiteren Basisgehäuses koppelbar ist. Auf diese Weise kann das Basisgehäuse des elektronischen Gerätes seitlich problemlos durch ein weiteres Basisgehäuse erweitert werden. Vorteilhaft sind an der unteren Wand der Kunststoffkappe Öffnungen für Kabelanschlüsse und/oder Steckkontakte vorgesehen. Die Kunststoffkappe kann außerdem Durchbrüche zur Befestigung einer Kabelkanalabdeckung oder eines Kabelhalters aufweisen.

Werden die Kunststoffkappe des Basisgehäuses und/oder die Modulgehäuse als Spritzgußteile gefertigt, so ist es vorteilhaft, die Öffnungen für die Kabelanschlüsse in der wannenförmigen Kunststoffkappe und/oder die Durchbrüche für die Kontakteinrichtungen in den wannenförmigen Modulgehäusen in schräg zur Entformungsrichtung der Spritzgußteile verlaufenden Seitenwänden anzuordnen, da dann die Spritzgußteile im Spritzgußwerkzeug ohne seitlichen Schieber gefertigt werden können.

Ein Masseanschluß des Bodenteils an einen äußeren Masseanschluß oder den Masseanschluß eines benachbarten Basisgehäuses wird vorteilhaft durch im Randbereich der Bodenwand ausgebildete metallische Laschen erreicht, welche durch Ausnehmungen aus dem wannenförmigen Bodenteil geführt sind.

### Zeichnungen

Ein Ausführungsbeispiel der Erfindung ist in der Zeichnung dargestellt und wird in der nachfolgenden Beschreibung näher erläutert.
Es zeigt
Fig. 1 einen Querschnitt durch eine Fernmeldevermittlungsanlauge mit einem Basisgehäuse und einem Modulgehäuse,
Fig. 2 eine Draufsicht auf die Frontwand des Basisgehäuses mit zwei an dem Basisgehäuse befestigten Modulgehäusen, ohne Bodenteil und Verbindungsleiterplatte,
Fig. 3 eine perspektivische Ansicht des Bodenteils des Basisgehäuses.

### Beschreibung der Ausführungsbeispiele

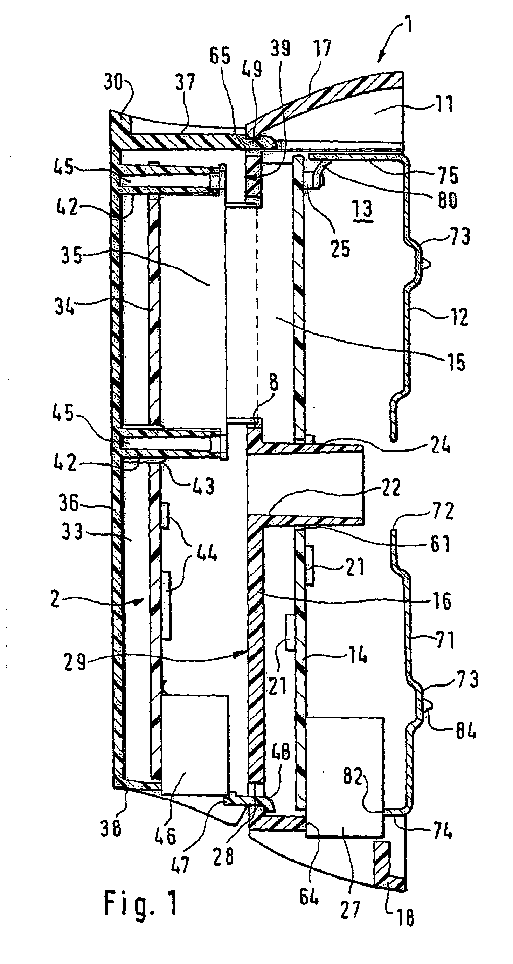

In den Figuren 1 bis 3 ist vereinfacht ein erfindungsgemäßes elektronisches Gerät dargestellt, welches als Fernmeldevermittlungsanlage ausgebildet ist. Die Erfindung beschränkt sich aber nicht auf Fernmeldevermittlungsanlagen, sondern kann auch in anderen elektronischen Geräten eingesetzt werden, um eine einfache Erweiterung oder einen schnellen Umbau des Gerätes mittels verschiedener, an eine gemeinsame Verbindungsleiterplatte anschließbarer und in jeweils einem Modulgehäuse angeordneter elektronischer Modulbaugruppen zu ermöglichen.

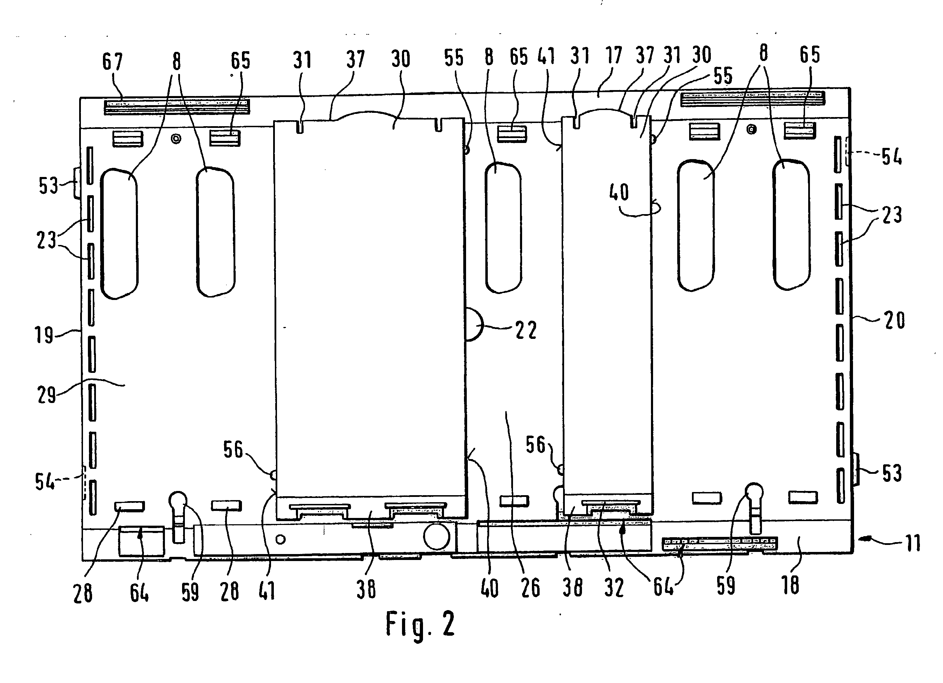

Wie in Fig. 1 zu erkennen ist, besteht das elektronische Gerät aus einem Basisgehäuse 1, in welchem eine Verbindungsleiterplatte 14 angeordnet ist. Die Verbindungsleiterplatte 14 ist mit elektronische Schaltungsteile bildenden elektrischen/elektronischen Bauelementen 21 versehen. Das Basisgehäuse 14 ist in diesem Ausführungsbeispiel zweiteilig mit einem Frontteil 11 und einem Bodenteil 12 ausgestaltet, kann aber auch in anderer Weise oder aus mehr als zwei Teilen gefertigt werden. Die Verbindungsleiterplatte 14 ist zwischen dem Bodenteil 12 und dem Frontteil 11 im Innenraum 13 des Basisgehäuses 1 befestigt. In einer Bodenwand 71 des Bodenteils 11 ist eine Öffnung 72 zur Durchführung einer Schraube vorgesehen, mit welcher das Basisgehäuse mit der Bodenwand 71 an einer nicht dargestellten Wand befestigbar ist. Außer dem Basisgehäuse 1 sind, wie insbesondere in Fig. 2 zu erkennen ist, mehrere Modulgehäuse 30 vorgesehen, die von außen an einer Frontwand 16 des Frontteils 11 festlegbar sind. In den Modulgehäusen 30 ist jeweils eine aus einer Modulleiterplatte 34 und darauf angeordneten elektrischen/elektronischen Bauelementen 44 bestehende elektronische Modulbaugruppe 2 angeordnet. Jeder Modulbaugruppe ist mit den für ihre Einzelfunktion benötigten Einrichtungen und elektronischen Schaltungsteilen versehen. Die Modulbaugruppen sind jeweils über wenigstens eine Kontaktierungsvorrichtung, welche ein mit der Modulbaugruppe 2 verbundenes Steckerteil 35 und einen auf der Verbindungsleiterplatte 14 angeordneten Gegenstecker 15 umfassen, an die Verbindungsleiterplatte anschließbar. Über das Stekkerteil 35 und den Gegenstecker 15 erfolgt der Anschluß der Modulbaugruppen 2 an ein gemeinsames Bussystem und die Stromversorgung. Für die elektrische Verbindung der Modulbaugruppen mit der Verbindungsleiterplatte weist die Frontwand 16 des Basisgehäuses 1 mehrere Ausnehmungen 8 auf, durch die jeweils eine Kontaktierungsvorrichtung hindurchgeführt ist. Durch die flexible Anordnung verschiedener Modulbaugruppen 2 an der Frontwand 16 des Basisgehäuses kann die Fernmeldervermittlungsanlage an ein vorgegebenes kundenspezifisches Anforderungsprofil angepaßt werden. Gleichzeitig ist die Verbindungsleiterplatte im Innenraum 13 des Basisgehäuses 1 vor Verunreinigungen geschützt.

Im folgenden werden die verschiedenen Komponenten der Fernmeldervermittlungsanlage der Reihe nach detailliert beschrieben.

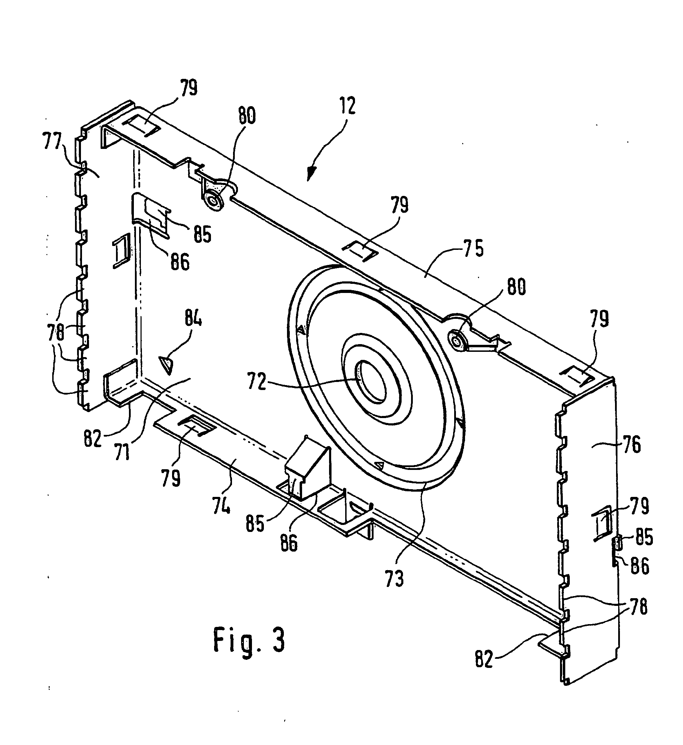

Das Bodenteil 12 des Basisgehäuses 1 ist als metallisches Stanzbiegeteil hergestellt und in Fig. 3 perspektivisch dargestellt. Das Bodenteil 12 ist als wannenförmiges Teil mit einer rechteckförmigen Bodenwand 71 und vier davon senkrecht in einer Richtung abgebogenen Seitenwänden 74-77 ausgebildet. In den Seitenwänden 74-77 sind nach außen abstehende, elastisch federnde Rastnasen 79 angeordnet, welche zur Festlegung des Frontteils 11 dienen. Die untere Wand 74 weist Ausnehmungen 82 für Kabelanschlüsse oder Steckkontakte auf. Die Bodenwand 71 ist mit einer Schraube an einer Wand befestigbar und weist zu diesem Zweck eine zentrale öffnung 72 zur Durchführung des Schraubenschaftes auf. Eine die Öffnung 72 konzentrisch umgebende Auswölbung 73 dient zur ebenen Auflage an der Wand. Natürlich kann das Bodenteil auch mit mehr als einer Schraube oder mit anderen Befestigungsmitteln in beliebiger Weise an der Wand festgelegt werden. Aus dem Bodenteil 12 herausgestanzte und umgebogene Krallen 84 verhindern eine Drehung des Bodenteils 11 an der Wand, falls dieses wie oben beschrieben mit nur einer Schraube befestigt wird. Im Randbereich der Bodenwand 71 sind in der Nähe der Seitenwände 76,77 Ausnehmungen 86 ausgebildet, durch welche abgekröpfte Laschen 85 aus dem wannenförmigen Bodenteil 12 nach außen abstehen. Die Laschen 85 sind als sogenannte Faston-Zungen ausgebildet und dienen zum Anschluß des metallischen Bodenteils an einen externen Masseanschluß oder den Masseanschluß eines benachbarten weiteren Basisgehäuses. An der oberen Wand 75 sind weiterhin zwei ringförmige, abgebogene elastisch biegsame Laschen 80 angeformt, welche einen Masseanschluß der Verbindungsleiterplatte 14 ermöglichen. Zu diesem Zweck werden zwei Masseanschlüsse 25 der Verbindungsleiterplatte 14 (Fig. 1) mit den Laschen 80 verschraubt. Außer den Laschen 80 sind in den vier Eckbereichen der rechteckförmigen Verbindungsleiterplatte 14 in den Zeichnungen nicht dargestellte Kontaktfederelemente vorgesehen, welche einen niederohmigen Masseanschluß an das Bodenteil 12 ermöglichen. Durch die vier Masseanschlüsse in den Eckbereichen der Verbindungsleiterplatte und die zusätzlichen Masseanschlüsse über die Laschen 80 an die obere Wand 75 des Bodenteils wird ein sehr guter EMV-Schutz (Elekromagnetische Verträglichkeit) der Anlage erreicht. Weiterhin sind die von der Bodenwand 71 abgewandten Enden der Seitenwände 76,77 kammartig mit Stegen 78 versehen, durch welche ein ausreichender ESD-Schutz (electrostatic dischargement) der Anlage erreicht wird, wie weiter unten noch erklärt wird.

Auf das Bodenteil 12 wird ein als Kunststoff-Spritzgußteil gefertigtes, wannenförmiges Frontteil 11 aufgesetzt. Das Frontteil 11 ist als Kunststoffkappe ausgebildet, welche sich über das Bodenteil 12 stülpen läßt. In einem anderen Ausführungsbeispiel kann aber auch vorgesehen sein, das Frontteil aus Metall zu fertigen. Wie in Fig. 1 und Fig. 2 dargestellt, besteht das Frontteil aus einer Frontwand 16, einer oberen Wand 17, einer unteren Wand 18 und zwei Seitenwänden 19,20. Die obere Wand 17 weist Ausnehmungen 67 (Fig. 2) für ein Typenschild oder ähnliches auf, die untere Wand 18 weist Öffnungen 64 (Fig. 1) für Kabelanschlüsse oder Steckkontakte 27 auf, die auf der Verbindungsleiterplatte 14 angeordnet sind. Während die Seitenwände 19,20 senkrecht von der Frontwand 16 abstehen, sind die obere Wand 17 und die untere Wand 18 als in bezug auf die Entformungsrichtung des Spritzgußteiles 11 schräg nach außen gewölbte Wände ausgebildet, wie am besten in Fig. 1 zu erkennen ist. Dies hat den Vorteil, daß die Öffnungen 64 und Ausnehmungen 67 ohne seitlichen Schieber im Spritzgußwerkzeug hergestellt werden können. In der Mitte des Frontteils 11 steht ein Dom 24 senkrecht von der Frontseite in Richtung der Seitenwände 19,20 ab, welcher mit einer zentralen Öffnung 22 versehen ist. Wie in Fig. 1 und Fig. 2 weiterhin zu erkennen ist, sind in der Frontwand 16 des Frontteils 11 zahlreiche Ausnehmungen 8 zur Durchführung von Stekkerteilen 35 der Modulbaugruppen 2 und/oder Gegensteckern 15 der Verbindungsleiterplatte 14 ausgebildet. Außerdem sind am oberen Rand der Frontwand 16 Durchbrüche 65 und am unteren Rand weitere Durchbrüche 28 vorgesehen. Wie am besten in Fig. 2 zu erkennen ist, ist die Außenseite 29 der Frontwand 16 in gleichartig ausgebildete, seitlich aneinandergereihte Aufnahmebereiche 26 unterteilt, wobei jeder Aufnahmebereich 26 eine Ausnehmung 8, einen oberen Durchbruch 65 und einen unteren Durchbruch 28 aufweist. Das in Fig. 2 dargestellte Frontteil 11 weist beispielsweise acht Aufnahmebereiche 26 auf. In der Nähe der Seitenwände 19,20 des Frontteils 11 sind Öffnungen 23 in der Frontwand 16 vorgesehen, welche zur Durchführung der Stege 78 des Bodenteils 11 dienen.

Beim Zusammenbau des Basisgehäuses 1 wird zunächst die Verbindungsleiterplatte 14 parallel zur Bodenwand 71 an dem Bodenteil 12 festgelegt, wobei alle Masseanschlüsse 25 mit dem Bodenteil kontaktiert werden. Anschließend wird das Frontteil 11 mit parallel zur Verbindungsleiterplatte 14 verlaufender Frontwand 16 auf die offene Seite des wannenförmigen Bodenteils 12 aufgeschoben. Dabei dringt der Dom 24 durch eine Ausnehmung 61 der Verbindungsleiterplatte 14. Die auf der Verbindungsleiterplatte 14 angeordneten Gegenstecker 15 werden durch die Ausnehmungen 8 nach außen geführt und stehen an der Außenseite 29 der Frontwand 16 ein Stück weit ab. An der unteren Wand 18 dringen die Steckkontakte 27 durch die Ausnehmungen 82 und Öffnungen 64. Die Stege 78 der Seitenwände 76,77 des Bodenteils 12 dringen durch die Öffnungen 23 mindestens bis zur Außenseite 29 der Frontwand 16. Es ist aber auch möglich, daß die Stege 78 ein Stück von der Außenseite 29 nach außen abstehen. Durch Einrasten der Rastnasen 79 des Bodenteils 12 hinter entsprechend ausgebildeten, nicht weiter dargestellten Vorsprüngen des Fronteils 11 wird das Frontteil 11 am Bodenteil 12 fest angeordnet. Die Verbindungsleiterplatte 14 ist jetzt im Innenraum 13 des Basisgehäuses 1 parallel zur Frontwand 16 und zur Bodenwand 71 angeordnet. Mit einer durch die Öffnung 22 des Doms 24 eingeführten Schraube kann das Basisgehäuse 1 nun an einer Wand festgelegt werden.

Falls erforderlich kann das Basisgehäuse 1 durch weitere gleichartig aufgebaute Basisgehäuse ergänzt werden, welche an der Wand beispielsweise neben den Seitenwänden 19,20 des Frontteils 11 des Basisgehäuses 1 angeordnet werden. Zu diesem Zweck sind an den Seitenwänden 19,20 wechselseitig versetzt angeordnete Vorsprünge 53 und Vertiefungen 54 angeordnet (Fig. 2), die mit Vorsprüngen und Vertiefungen eines benachbarten gleichartig aufgebauten Basisgehäuses koppelbar sind. Die Verdrahtung der nebeneinander angeordneten Basisgehäuse kann über Kabel erfolgen, welche mit den Steckkontakten 27 an der unteren Wand 18 des Basisgehäsues 1 verbunden sind. Für diese Kabel kann eine Kabelkanalabdeckung oder ein Kabelhalter vorgesehen sein, der in Durchbrüchen 59 der Frontwand 16 befestigt werden kann.

Anders als in dem hier dargestellten Ausführungsbeispiel ist es auch möglich, die Gegenstecker 15 nicht auf der Verbindungsleiterplatte 14 anzuordnen, sondern jeweils in einer Ausnehmung 8 der Frontwand 16 festzulegen und über Folienleiter oder andere elektrische Verbindungsmittel mit der Verbindungsleiterplatte 14 im Inneren des Basisgehäuses zu verbinden.

An dem an der Wand festgelegten Basisgehäuse 1 können die Modulbaugruppen 2 mit ihren Modulgehäusen 30 festgelegt werden. Im Querschnitt der Fig. 1 ist beispielhaft ein Modulgehäuse 30 gezeigt, welches als wannenförmiges Spritzgußteil aus Kunststoff mit einer Vorderwand 36, einer oberen Wand 37, einer unteren Wand 38 und zwei Seitenwänden 40,41 (Fig. 2) und einer offenen Rückseite 39 ausgebildet ist. In die Seitenwände 40,41 sind parallel zur Vorderwand 36 und offenen Rückseite 39 verlaufende, in den Figuren nicht weiter dargestellte Nuten eingelassen. Die Modulgehäuse 30 können in einem anderen Ausführungsbeispiel auch als allseitig geschlossene Gehäuse ausgebildet sein. Beispielsweise ist es möglich, die offene Rückseite 39 der Modulgehäuse 30 mit einem metallischen ESD-Schutzblech abzudecken, in dem noch eine Öffnung für das Steckerteil 35 vorgesehen ist. Auch ist denkbar die Gehäuse 30 ganz aus Metall zu fertigen. Die Modulgehäuse 30 müssen nicht alle genau gleichartig ausgebildet sein. Wie in Fig. 2 dargestellt ist, sind die Modulgehäuse 30 so ausgebildet, daß die Abmessungen ihrer offenen Rückseite 39 gerade der Flächenabmessungen eines Aufnahmebereiches 26 oder der Flächenabmessungen zweier benachbarten Aufnahmebereiche 26 entspricht. Natürlich ist auch denkbar, die Modulgehäuse so auszubilden, daß sie drei oder mehr benachbarten Aufnahmebereichen entsprechen. So können wahlweise Einfachmodule, Doppelmodule oder Mehrfachmodule an der Außenseite 29 der Frontwand 16 angeordnet werden. Nicht belegte Aufnahmebereiche 26 an der Außenseite 29 der Frontwand 16, beispielsweise der in Fig. 2 gezeigte Aufnahmebereich 26 zwischen den beiden dargestellten Modulgehäusen 30, können durch Leergehäuse abgedeckt werden, welche äußerlich wie die Modulgehäuse 30 aufgebaut sind aber keine elektronische Modulbaugruppe enthalten.

Die Modulgehäuse sind wie folgt aufgebaut. Wie in Fig. 1 zu erkennen ist, stehen von der Innenseite der Vorderwand 36 zwei zapfenartige Vorsprünge 42 senkrecht in den Innenraum 33 des wannenförmigen Modulgehäuses 30 ab. Einer der Vorsprünge ist im zentralen Bereich des Modulgehäuses, ein weiterer in der Nähe der oberen Wand 37 angeordnet. Jeder Vorsprung 42 ist mit einer axialen Aufnahmeöffnung 45 zur Einführung einer nicht dargestellten Schraube versehen. Eine mit elektrischen und elektronischen Bauelementen 44 versehene Modulleiterplatte 34 weist einen Durchbruch 43 zur Durchführung eines der Vorsprünge 42 auf. Auf der von der Vorderwand 36 abgewandten Seite der Modulleiterplatte 34 ist eine Steckerteil 35 des Moduls angeordnet, beispielsweise in Oberflächenmontage aufgelötet. Das Steckerteil 35 ist mit zwei nicht dargestellten Schrauben mit den Vorsprüngen 42 verschraubt. Hierdurch wird sowohl das Steckerteil 35 am Modulgehäuse 30 festgelegt als auch gleichzeitig die mit dem Steckerteil verbundene Modulleiterplatte im Modulgehäuse befestigt. Außerdem wird hierdurch vorteilhaft verhindert, daß bei einer mechanischen Belastung des Steckerteils 35, die Lötverbindung zwischen Stekkerteil und Modulleiterplatte beschädigt wird. Nach der Festlegung der Modulleiterplatte 34 im Modulgehäuse 30 ragt das Steckerteil 35 ein Stück aus der offenen Rückseite 39 des Modulgehäuse nach außen. Eine auf der Modulleiterplatte angeordnete Kontaktvorrichtung 46, welche beispielsweise für den Anschluß von Teilnehmerleitungen oder Amtsleitungen der Modulbaugruppe 2 vorgesehen ist, ist durch einen Durchbruch 47 in der unteren Wand 38 des Modulgehäuses 30 zugänglich. Wie die Öffnung 64 der Kunststoffkappe 11 des Basisgehäuses kann der Durchbruch 47 im Spritzgußwerkzeug ohne seitlichen Schieber gefertigt werden, wenn sich die untere Wand 38 in bezug auf die Entformungsrichtung des Spritzgußteils schräg nach außen erstreckt.

Wie weiterhin in Fig. 1 zu erkennen ist, steht ein als Befestigungsmittel vorgesehenes Hakenteil 48 im Bereich der unteren Wand 38 von der Rückseite 39 des Modulgehäuses 30 nach außen ab. Bei der Festlegung des Modulgehäuses 30 an der Frontwand wird zunächst das Hakenteil 48 in den Durchbruch 28 eingesetzt. Die Breite des Hakenteils 48 und die Breite des Durchbruchs 28 sind so aufeinander abgestimmt, daß das Hakenteil 48 mit geringen Spiel an den inneren Seitenwänden des Durchbruchs 28 anliegt. Durch das in den Durchbruch 28 eingreifende Hakenteil 48 wird ein Schwenklager für das Modulgehäuse gebildet. Das Modulgehäuse 39 kann nun mit der Rückseite 39 zur Frontwand 16 hingeschwenkt werden, bis das Steckerteil 35 des Modulgehäuses in den Gegenstecker 15 der verbindungsleiterplatte 14 eingreift. Durch das Schwenklager wird das Steckerteil 35 vorteilhaft so geführt, daß es senkrecht zur Frontwand 16 in den zugeordneten Gegenstecker 35 eingreift. In der Endphase der Schwenkbewegung dringt außerdem ein an der oberen Wand 37 des Modulgehäuses 30 als weiteres Befestigungsmittel ausgebildeter elastisch federnder Rasthaken 49 in einen weiteren Durchbruch 65 der Frontwand 16 ein und hinterfaßt den oberen Rand des Durchbruchs 65 mit einer Rastnase. Das Modulgehäuse 30 ist nun an der Außenseite 29 der Frontwand 16 festgelegt. Um das Modulgehäuse 30 wieder von der Frontwand 16 ablösen zu können, genügt ein Druck auf die obere Wand 37, um den Rasthaken 49 zu lösen und das Modulgehäuse 30 von der Außenseite 29 zurückschwenken zu können. Wie in Fig. 2 dargestellt ist, sind in der oberen Wand 37 der Modulgehäuse 30 jeweils zwei senkrecht zur Vorderwand 36 verlaufende Schlitze 31 eingebracht. Der zwischen den beiden Schlitzen 31 befindliche, elastisch biegsame Bereich der oberen Wand 37 ist mit dem Rasthaken 49 versehen. Durch die Schlitze 31 wird erreicht, daß der Rasthaken 49 durch Druck auf die obere Wand 37 in bequemer Weise aus dem Durchbruch 65 gelöst werden kann. Weiterhin sind in der unteren Wand 38 der Modulgehäuse 30 senkrecht zur Vorderwand 36 verlaufende Schlitze 32 eingelassen, in welche ein entsprechend ausgebildetes Abdeckplättchen eingeschoben werden kann (Fig. 2). Auf diese Weise können beispielsweise die Durchbrüche 47 der Gehäuse 30 verschlossen werden, wenn ein Gehäuse 30 keine Baugruppe 2 beinhalten soll und nur aus optischen Gründen als Leergehäuse an der Frontwand 16 festgelegt wird.

Weiterhin sind an den Seitenwänden 40,41 der Modulgehäuse 30 wechselseitig versetzte Noppen 55,56 ausgebildet, welche beim seitlichen Aneinanderreihen der Modulgehäuse 30 an der Seitenwand eines unmittelbar benachbarten Modulgehäuses zur Anlage gelangen. Durch die Noppen 55,56 wird erreicht, daß sich die Seitenwände der Modulgehäuse nahezu spielfrei und rüttelsicher berühren.

Die oben beschriebene Festlegung des Modulgehäuses 30 an der Frontwand 16 wurde für das rechts in Fig. 2 dargestellte Modulgehäuse beschrieben. Das links in Fig. 2 dargestellte Modulgehäuse 30 für ein "Doppelmodul" weist entsprechend zwei untere Hakenteile 48, zwei obere Rasthaken 49 und zwei Stekkerteile 35 auf, welche jeweils in einen Gegenstecker 35 der Verbindungsleiterplatte 14 eingreifen. Dadurch, daß mehr als zwei Rasthaken 49 an der oberen Wand 37 ausgebildet sind, wird erreicht, daß sich das Modulgehäuse nur durch Druck auf zwei Stellen der oberen Wand 37 von der Frontwand des Basisgehäuses lösen läßt. Hierdurch ist eine zusätzliche Sicherheit bei der Festlegung gegeben.

Anders als bei dem in den Figuren dargestellten Ausführungsbeispiel ist es aber auch möglich, die Modulgehäuse 30 nur mittels des Steckerteil 35 an dem Gegenstecker 35 festzulegen. Da die aus Kunststoff gefertigten, an der Rückseite offenen Modulgehäuse sehr leicht gebaut sind, ist eine ausreichende mechanische Befestigung der Modulgehäuse 30 an der Frontwand 16 des Basisgehäuses 1 allein über die Steckverbindung erreichbar. Außerdem ist möglich die Modulgehäuse, anders als in dem oben beschriebenen Ausführungsbeispiel, zusätzlich mit schraubbaren Verbindungsmitteln an der Frontwand des Basisgehäuses festzulegen.

Wie weiterhin in Fig. 2 dargestellt ist, sind die Öffnungen 23 für die metallischen Stege 78 des Bodenteils 12 an den mit den Seitenwänden 19,20 versehenen Rändern der Frontwand 16 angeordnet. Bei der Festlegung der äußeren Modulgehäuse (des ganz links und des ganz rechts anzuordnenden Modulgehäuses in Fig. 2) sind die freien Enden der Stege 78 in der Nähe je einer äußeren Seitenwand eines Modulgehäuses angeordnet. Hierdurch wird ein wirksamer ESD-Schutz erreicht. Anders als in dem hier gezeigten Ausführungsbeispiel ist es aber auch möglich, weitere Stege und Öffnungen am oberen und unteren Rand der Außenseite 29 der Frontwand vorzusehen, um dort falls erforderlich einen ähnlichen Schutz zu erhalten. Die Stege können auch von der Frontwand abstehen. Ein ESD-Schutz kann aber auch durch auf die Seitenwände 19,20 aufgebrachte und mit dem metallischen Bodenteil 12 elektrisch verbundene Schutzbleche erfolgen.

Mit dem erfindungsgemäßen elektronischen Gerät ist für den Benutzer ein einfacher modularer Auf- oder Umbau der Anlage beziehungsweise eine Erweiterung und eine Anpassung an das jeweilige Anforderungsprofil mit wenigen einfachen Handgriffen durch Aufstecken und Entfernen von Modulbaugruppen zu realisieren.

## Patentansprüche

1. Elektronisches Gerät, insbesondere Fernmeldevermittlungsanlage, mit mehreren in jeweils einem Modulgehäuse (30) angeordneten elektronischen Modulbaugruppen (2), welche über jeweils eine Kontaktierungsvorrichtung (15,35) an eine gemeinsame Verbindungsleiterplatte (14) elektrisch anschließbar sind, **dadurch gekennzeichnet, daß** die Verbindungsleiterplatte (14) in einem Basisgehäuse (1) angeordnet ist und die Modulgehäuse (30) der Modulbaugruppen (2) außerhalb des Basisgehäuses (1) an einer Frontwand (16) des Basisgehäuses lösbar befestigbar sind, welche Frontwand (16) Ausnehmungen (8) zur Durchführung der Kontaktierungsvorrichtungen (15,35) aufweist.

2. Elektronisches Gerät nach Anspruch 1, **dadurch gekennzeichnet, daß** die Kontaktierungsvorrichtungen jeweils wenigstens ein an der Rückseite (39) der Modulgehäuse (30) angeordnetes Steckerteil (35) und jeweils einen mit der Verbindungsleiterplatte (14) elektrisch verbundenen Gegenstecker (15) umfassen, welches Steckerteil (35) in einer senkrecht zur Frontwand (16) verlaufenden Steckrichtung mit dem Gegenstecker (15) kontaktierbar ist.

3. Elektronisches Gerät nach Anspruch 2**, dadurch gekennzeichnet, daß** die Gegenstecker (15) unmittelbar auf der Verbindungsleiterplatte (14) angeordnet sind.

4. Elektronisches Gerät nach Anspruch 2 oder 3, **dadurch gekennzeichnet, daß** die Modulgehäuse (30) durch Einstecken des wenigstens einen Steckerteils (35) in einen Gegenstecker (15) der Verbindungleiterplatte (14) an der Frontwand (16) lösbar befestigbar sind.

5. Elektronisches Gerät nach Anspruch 4, **dadurch gekennzeichnet, daß** weitere lösbare Befestigungsmittel (28,48,49, 65) zur Festlegung und Sicherung der Modulgehäuse (30) an der Frontwand (16) vorgesehen sind.

6. Elektronisches Gerät nach Anspruch 5**, dadurch gekennzeichnet, daß** die weiteren lösbaren Befestigungsmittel (28, 48,49,65) Schraubmittel oder Rastmittel umfassen.

7. Elektronisches Gerät nach Anspruch 5, **dadurch gekennzeichnet, daß** die weiteren lösbaren Befestigungsmittel wenigstens ein vorzugsweise unterhalb des wenigstens einen Steckerteils (35) an dem Modulgehäuse (30) angeordnetes Hakenteil (48) umfassen, welches von der Rückseite (39) des Modulgehäuses absteht und in einen Durchbruch (28) der Frontwand (16) des Basisgehäuses (1) unter Bildung eines Schwenklagers einsetzbar ist.

8. Elektronisches Gerät nach Anspruch 5, **dadurch gekennzeichnet, daß** als weiteres lösbares Befestigungsmittel wenigstens ein elastisch federnder Rasthaken (49) an dem Modulgehäuse (30) vorzugsweise oberhalb des wenigstens einen Steckerteils (35) angeordnet ist, der von der Rückseite (39) des Modulgehäuses absteht und beim Einstecken des Steckerteils (35) in den Gegenstecker (15) in einen Durchbruch (65) der Frontwand (16) eindringt und den Durchbruch rastend hintergreift.

9. Elektronisches Gerät nach einem der Ansprüche 1 bis 8, **dadurch gekennzeichnet, dass** eine Außenseite (29) der Frontwand (16) des Basisgehäuses (1) als ebene Fläche ausgestaltet ist und dass die Modulgehäuse (30) seitlich aneinandergereiht und direkt nebeneinander benachbart an der Außenseite (29) festlegbar sind.

10. Elektronisches Gerät nach Anspruch 9, **dadurch gekennzeichnet, dass** die Außenseite (29) der Frontwand (16) in mehrere seitlich aneinandergereihte Aufnahmebereiche (26) mit gleichen räumlichen Abmessungen unterteilt ist, wobei jeder Aufnahmebereich (26) wenigstens eine Ausnehmung (8) aufweist.

11. Elektronisches Gerät nach Anspruch 1, **dadurch gekennzeichnet, dass** das die Verbindungsleiterplatte (14) beinhaltende Basisgehäuse (1) aus einem an einer Wand befestigbaren Bodenteil (12) und einem mit dem Bodenteil (12) verbundenen Frontteil (11) besteht.

12. Elektronisches Gerät nach Anspruch 11, **dadurch gekennzeichnet, dass** das Bodenteil (12) aus Metall, vorzugsweise als Stanzbiegeteil, gefertigt ist.

13. Elektronisches Gerät nach Anspruch 11, **dadurch gekennzeichnet, dass** das Frontteil (11) ein Kunststoffteil, insbesondere ein Spritzgußteil ist.

14. Elektronisches Gerät nach Anspruch 12, **dadurch gekennzeichnet, dass** wenigstens ein Masseanschluß (25)der Verbindungsleiterplatte (14) mit dem metallischen Bodenteil (12) elektrisch leitend verbunden ist.

15. Elektronisches Gerät nach Anspruch 14, **dadurch gekennzeichnet, dass** wenigstens zwei mit dem Bodenteil (12) elektrisch verbundene Masseanschlüsse (25) an sich gegenüberliegenden Abschnitten der Verbindungsleiterplatte (14) angeordnet sind.

16. Elektronisches Gerät nach Anspruch 15, **dadurch gekennzeichnet, dass** wenigstens vier vorzugsweise in den Eckbereichen der Verbindungsleiterplatte (14) angeordnete Masseanschlüsse (25) mit dem Bodenteil (12) elektrisch verbunden sind.

17. Elektronisches Gerät nach Anspruch 12, **dadurch gekennzeichnet, dass** das Bodenteil (12) einstückig als wannenförmiges Stanzbiegeteil mit einer rechteckförmigen Bodenwand (71) und vier von der Bodenwand zum Frontteil (11) hin abstehenden Seitenwänden (74, 75, 76, 77) ausgebildet ist.

18. Elektronisches Gerät nach Anspruch 13, **dadurch gekennzeichnet, dass** das Frontteil (11) einstückig als eine auf das Bodenteil (12) aufsetzbare, wannenförmige Kunststoffkappe ausgebildet ist, welche die Frontwand (16), eine obere Wand (17) und untere Wand (18) und zwei Seitenwände (19, 20) umfaßt.

19. Elektronisches Gerät nach Anspruch 2, **dadurch gekennzeichnet, dass** die Modulgehäuse (30) als wannenförmige Kunststoffteile, insbesondere als Spritzgußteile, mit einer Vorderwand (36), einer oberen Wand (37) und unteren Wand (38), zwei Seitenwänden (40, 41) und einer offenen Rückseite (39) ausgestaltet sind.

20. Elektronisches Gerät nach Anspruch 19**, dadurch gekennzeichnet, dass** an der unteren Wand (38) der Modulgehäuse (30) wenigstens ein Durchbruch (47) für eine Kontakteinrichtung (46) zum Anschluß externer Kabelverbindungen an die Modulbaugruppen (2) vorgesehen ist.

21. Elektronisches Gerät nach einem der Ansprüche 12 oder 14 bis 17, **dadurch gekennzeichnet, dass** das Basisgehäuse ESD-Schutzbleche (76, 77) aufweist, welche sich im äußeren Randbereich der Frontwand (16) des Basisgehäuses (1) von der den Modulbaugruppen (2) abgewandten Seiten der Frontwand aus mindestens bis zur Außenseite (29) der Frontwand erstrecken.

22. Elektronisches Gerät nach Anspruch 17, **dadurch gekennzeichnet, dass** wenigstens zwei sich einander gegebüberliegende Seitenwände (76, 77) des Bodenteils (12) als ESD-Schutzbleche ausgebildet sind, wobei die von der Bodenwand (71) abgewandten Enden der wenigstens zwei Seitenwände (76, 77) mit Stegen (78) versehen sind, die im Randbereich der Frontwand (16) durch Öffnungen (23) des Frontteils (11) wenigstens bis zur Außenseite (29) der Frontwand hindurchgeführt sind.

23. Elektronisches Gerät nach Anspruch 19, **dadurch gekennzeichnet, dass** im Innenraum (33) der wannenförmigen Modulgehäuse(30) eine mit dem wenigstens einen Steckerteil (35) elektrisch und mechanisch verbundene und mit elektrischen/elektronischen Bauelementen (44) bestückte Modulleiterplatte (34) angeordnet ist, wobei wenigstens ein senkrecht von der Vorderwand (36) der wannenförmigen Modulgehäuse (30) in den Innenraum (33) der Modulgehäuse abstehender Vorsprung (42) vorgesehen ist, an welchem das wenigstens eine Steckerteil (35) festgelegt ist.

24. Elektronisches Gerät nach Anspruch 23, **dadurch gekennzeichnet, dass** der wenigstens eine Vorsprung (42) einen Durchbruch (43) der Modulleiterplatte durchgreift.

25. Elektronisches Gerät nach Anspruch 23 oder 24, **dadurch gekennzeichnet, dass** das wenigstens eine Steckerteil (35) mit schraubbaren Verbindungsmitteln an dem wenigstens einen Vorsprung (42) befestigbar ist.

26. Elektronisches Gerät nach Anspruch 9, **dadurch gekennzeichnet, dass** an den Seitenwänden (40, 41) der Modulgehäuse (30) wechselseitig versetzte Noppen (55, 56) ausgebildet sind, welche beim seitlichen Aneinanderreihen der Modulgehäuse (30) an der Seitenwand eines unmittelbar benachbarten Modulgehäuses zur Anlage gelangen.

27. Elektronisches Gerät nach Anspruch 19, **dadurch gekennzeichnet, dass** in die Seitenwände (40, 41) der Modulgehäuse wenigstens eine sich parallel zur Rückseite (39) der Modulgehäuse erstreckende Nut eingebracht ist.

28. Elektronisches Gerät nach Anspruch 18, **dadurch gekennzeichnet, dass** an wenigstens einer Seitenwand (19, 20) der Kunststoffkappe (11) wenigstens ein Vorsprung (53) und/oder eine Vertiefung (54) ausgebildet ist, welche mit einer entsprechend ausgebildeten Vertiefung und/oder einem Vorsprung eines weiteren Basisgehäuses koppelbar ist.

29. Elektronisches Gerät nach Anspruch 18, **dadurch gekennzeichnet, dass** an der unteren Wand (18) der Kunststoffkappe (11) Öffnungen (64) für Kabelanschlüsse und/oder Steckkontakte (27) vorgesehen sind.

30. Elektronisches Gerät nach Anspruch 18**, dadurch gekennzeichnet, dass** die Kunststoffkappe (11) Durchbrüche (59) zur Befestigung einer Kabelkanalabdeckung oder eines Kabelhalters aufweist.

31. Elektronisches Gerät nach Anspruch 20 oder 30, **dadurch gekennzeichnet, dass** die Kunststoffkappe (11) und/oder die aus Kunststoff gefertigen Modulgehäuse (30) als Spritzgußteile gefertigt sind und dass die Öffnungen (64) in der wannenförmigen Kunststoffkappe (11) und/oder die Durchbrüche (47) in den wannenförmigen Modulgehäuse (30) in einer schräg zur Entformungsrichtung der Spritzgußteile verlaufenden unteren Wand (18, 38) angeordnet sind.

32. Elektronisches Gerät nach Anspruch 17, **dadurch gekennzeichnet, dass** im Randbereich der Bodenwand (12) metallische Laschen (85) ausgebildet sind, welche durch Ausnehmungen (86) aus dem wannenförmigen Bodenteil (12) geführt sind und einen Masseanschluß des Bodenteils an ein externes Massekabel ermöglichen.

## Claims

1. Electronic appliance, in particular a telecommunications exchange, having a plurality of electronic module assemblies (2) which are each arranged in a module housing (30) and can be electrically connected via a respective contact-making apparatus (15, 35) to a common connection printed circuit board (14), **characterized in that** the connection printed circuit board (14) is arranged in a base housing (1), and the module housings (30) of the module assemblies (2) can be detachably attached to a front wall (16) of the base housing, outside the base housing (1), which front wall (16) has recesses (8) for the contact-making apparatuses (15, 35) to pass through.

2. Electronic appliance according to Claim 1, **characterized in that** the contact-making apparatuses each have at least one plug part (35), which is arranged on the rear face (39) of the module housings (30), and in each case one mating connector (15), which is electrically connected to the connection printed circuit board (14), which plug part (35) can make contact with the mating connector (15) in an insertion direction which runs at right angles to the front wall (16).

3. Electronic appliance according to Claim 2, **characterized in that** the mating connectors (15) are arranged directly on the connection printed circuit board (14).

4. Electronic appliance according to Claim 2 or 3, **characterized in that** the module housings (30) can be detachably attached to the front wall (16) by insertion of the at least one plug part (35) into a mating connector (15) on the connection printed circuit board (14).

5. Electronic appliance according to Claim 4, **characterized in that** further detachable attachment means (28, 48, 49, 65) are provided for fixing and securing the module housings (30) on the front wall (16).

6. Electronic appliance according to Claim 5, **characterized in that** the further detachable attachment means (28, 48, 49, 65) comprise screw means or latching means.

7. Electronic appliance according to Claim 5, **characterized in that** the further detachable attachment means comprise at least one hook part (48) which is arranged on the module housing (30), preferably underneath the at least one plug part (35), projects from the rear face (39) of the module housing, and can be inserted in an aperture (28) in the front wall (16) of the base housing (1), forming a pivoting bearing.

8. Electronic appliance according to Claim 5, **characterized in that** at least one elastically sprung latching hook (49) is arranged on the module housing (30), preferably above the at least one plug part (35), as a further detachable attachment means, projects from the rear face (39) of the module housing, enters an aperture (65) in the front wall (16) when the plug part (35) is being inserted into the mating connector (15), and engages behind the aperture, with a latching effect.

9. Electronic appliance according to one of Claims 1 to 8, **characterized in that** an outer face (29) of the front wall (16) of the base housing (1) is in the form of a flat surface, and **in that** the module housings (30) are arranged in a row or rows at the side and can be fixed to the outer face (29), directly adjacent to one another.

10. Electronic appliance according to Claim 9, **characterized in that** the outer face (29) of the front wall (16) is subdivided into a plurality of holding areas (26), which are arranged in a row or rows laterally and have the same spatial dimensions, with each holding area (26) having at least one recess (8).

11. Electronic appliance according to Claim 1, **characterized in that** the base housing (1) which contains the connection printed circuit board (14) comprises a bottom part (12), which can be attached to a wall, and a front part (11), which is connected to the bottom part (12).

12. Electronic appliance according to Claim 11, **characterized in that** the bottom part (12) is manufactured from metal, preferably as a stamped and bent part.

13. Electronic appliance according to Claim 11, **characterized in that** the front part (11) is a plastic part, in particular an injection-moulded part.

14. Electronic appliance according to Claim 12, **characterized in that** at least one earth connection (25) on the connection printed circuit board (14) is electrically conductively connected to the metallic bottom part (12).

15. Electronic appliance according to Claim 14, **characterized in that** at least two earth connections (25), which are electrically connected to the bottom part (12), are arranged on mutually opposite sections of the connection printed circuit board (14).

16. Electronic appliance according to Claim 15, **characterized in that** at least four earth connections (25), which are preferably arranged in the corner areas of the connection printed circuit board (14), are electrically connected to the bottom part (12).

17. Electronic appliance according to Claim 12, **characterized in that** the bottom part (12) is formed integrally as a stamped and bent part in the form of a trough, with a rectangular bottom wall (71) and four side walls (74, 75, 76, 77) which project from the bottom wall towards the front part (11).

18. Electronic appliance according to Claim 13, **characterized in that** the front part (11) is formed integrally as a plastic cap which can be fitted to the bottom part (12), is in the form of a trough and surrounds the front wall (16), an upper wall (17) and a lower wall (18), and two side walls (19, 20).

19. Electronic appliance according to Claim 2, **characterized in that** the module housings (30) are plastic parts, in particular injection-moulded parts, which are in the form of troughs and have a front wall (36), an upper wall (37) and a lower wall (38), two side walls (40, 41) and an open rear face (39).

20. Electronic appliance according to Claim 19, **characterized in that** at least one aperture (47) is provided in the lower wall (38) of the module housings (30) for a contact-making device (46) for connection of external cable connections to the module assemblies (2).

21. Electronic appliance according to one of Claims 12 or 14 to 17, **characterized in that** the base housing has ESD protection plates (76, 77), which extend in the outer edge area of the front wall (16) of the base housing (1) from those sides of the front wall which face away from the module assemblies (2) at least as far as the outer face (29) of the front wall.

22. Electronic appliance according to Claim 17, **characterized in that** at least two mutually opposite side walls (76, 77) of the bottom part (12) are formed by ESD protection plates, with those ends of the at least two side walls (76, 77) which face away from the bottom wall (71) being provided with webs (78) which are passed through openings (23) in the front part (11), at least as far as the outer face (29) of the front wall, in the edge area of the front wall (16).

23. Electronic appliance according to Claim 19, **characterized in that** a module printed circuit board (34), which is electrically and mechanically connected to the at least one plug part (35) and is fitted with electrical/electronic components (44), is arranged in the interior (33) of the module housings (30) which are in the form of troughs, with at least one projection (42) being provided, which projects at right angles from the front wall (36) of the module housings (30), which are in the form of troughs, into the interior (33), and to which the at least one plug part (35) is fixed.

24. Electronic appliance according to Claim 23, **characterized in that** the at least one projection (42) passes through an aperture (43) in the module printed circuit board.

25. Electronic appliance according to Claim 23 or 24, **characterized in that** the at least one plug part (35) can be attached by means of screw-type connection means to the at least one projection (42).

26. Electronic appliance according to Claim 9, **characterized in that** alternately offset studs (55, 56) are formed on the side walls (40, 41) of the module housings (30) and rest against the side wall of an immediately adjacent module housing when the module housings (30) are arranged in a row or rows laterally.

27. Electronic appliance according to Claim 19, **characterized in that** at least one groove, which extends parallel to the rear face (39) of the module housings, is incorporated in the side walls (40, 41) of the module housings.

28. Electronic appliance according to Claim 18, **characterized in that** at least one projection (53) and/or one depression (54) are/is formed on at least one side wall (19, 20) of the plastic cap (11) and can be coupled to a corresponding depression and/or a projection in or on a further base housing.

29. Electronic appliance according to Claim 18, **characterized in that** openings (64) for cable connections and/or plug contacts (27) are provided on the lower wall (18) of the plastic cap (11).

30. Electronic appliance according to Claim 18, **characterized in that** the plastic cap (11) has apertures (59) for attachment of a cable duct cover or a cable holder.

31. Electronic appliance according to Claim 20 or 30, **characterized in that** the plastic cap (11) and/or the module housings (30) which are manufactured from plastic are/is manufactured as injection-moulded parts, and **in that** the openings (64) in the plastic cap (11), which is in the form of a trough, and/or the apertures (47) in the module housings (30), which are in the form of troughs, are arranged in a lower wall (18, 38) which runs at an angle to the deformation direction of the injection-moulded parts.

32. Electronic appliance according to Claim 17, **characterized in that** metallic lugs (85) are formed in the edge area of the bottom wall (12), are passed through recesses (86) from the bottom part (12), which is in the form of a trough, and allow an earth connection between the bottom part and an external earth cable.

## Revendications

1. Appareil électronique, notamment central téléphonique, ayant plusieurs blocs (2) de module électroniques disposés dans respectivement un boîtier (30) de module et pouvant être raccordés électriquement à une plaquette (14) à circuit imprimé commune de liaison par respectivement un dispositif (15, 35) de mise en contact, **caractérisé en ce que** la plaquette (14) à circuit imprimé de liaison est disposée dans un boîtier (1) de base et les boîtiers (30) de module des blocs (2) de module peuvent être fixés de manière amovible à l'extérieur du boîtier (1) de base à une paroi (16) avant du boîtier de base, paroi (16) avant qui a des évidements (8) pour le passage des dispositifs (15, 35) de mise en contact.

2. Appareil électronique suivant la revendication 1, **caractérisé en ce que** les dispositifs de mise en contact comprennent, respectivement, au moins une partie (35) de connecteur disposée sur la face (39) arrière du boîtier (30) de module et respectivement un contre-connecteur (15) relié électriquement à la plaquette (14) à circuit imprimé de liaison, la partie (35) de connecteur pouvant être mise en contact avec le contre-connecteur (15) dans une direction d'enfichage s'étendant perpendiculairement à la paroi (16) avant.

3. Appareil électronique suivant la revendication 2, **caractérisé en ce que** les contre-connecteurs (15) sont disposés directement sur la plaquette (14) à circuit imprimé de liaison.

4. Appareil électronique suivant la revendication 2 ou 3, **caractérisé en ce que** les boîtiers (30) de module peuvent être fixés de manière amovible à la paroi (16) avant en enfichant la au moins une partie (35) de connecteur dans un contre-connecteur (15) de la plaquette (14) à circuit imprimé de liaison.

5. Appareil électronique suivant la revendication 4, **caractérisé en ce qu'**il est prévu d'autres moyens (28, 48, 49, 65) de liaison amovibles pour fixer et assujettir les boîtiers (30) de module à la paroi (16) avant.

6. Appareil électronique suivant la revendication 5, **caractérisé en ce que** les autres moyens (28, 48, 49, 65) de fixation amovibles comprennent des moyens de vissage ou des moyens d'encliquetage.

7. Appareil électronique suivant la revendication 5, **caractérisé en ce que** les autres moyens de fixation amovibles comprennent au moins une partie (48) de crochet qui est disposée, de préférence, en dessous de la au moins une partie (35) de connecteur sur le boîtier (30) de module, qui fait saillie de la face (39) arrière du boîtier de module, et qui peut être introduite dans une traversée (28) de la paroi (16) avant du boîtier (1) de base en formant un palier pivotant.

8. Appareil électronique suivant la revendication 5, **caractérisé en ce que**, comme autre moyen de fixation amovible, au moins un crochet (49) d'encliquetage à suspension élastique est monté sur le boîtier (30) de module, de préférence au-dessus de la au moins une partie (35) de connecteur, fait saillie de la face (39) arrière du boîtier de module et, lorsque la partie (35) de connecteur est enfichée dans le contre-connecteur (15), pénètre dans une traversée (65) de la paroi (16) avant et s'y encliquette.

9. Appareil électronique suivant l'une des revendications 1 à 8, **caractérisé en ce qu'**une face (29) extérieure de la paroi (16) avant du boîtier (1) de base est constituée en surface plane et **en ce que** les boîtiers (30) de module sont juxtaposés latéralement et peuvent être fixés en étant directement voisins les uns à côté des autres sur la face (29) extérieure.

10. Appareil électronique suivant la revendication 9, **caractérisé en ce que** la face (29) extérieure de la paroi (16) avant est subdivisée en plusieurs régions (26) de réception juxtaposées latéralement et ayant les mêmes dimensions spatiales, chaque région (26) de réception ayant au moins un évidement (18).

11. Appareil électronique suivant la revendication 1, **caractérisé en ce que** le boîtier (1) de base comportant la plaquette (14) à circuit imprimé de liaison est constitué d'une partie (12) de fond pouvant être fixée à une paroi et d'une partie (11) avant pouvant être assemblée à la partie (12) de fond.

12. Appareil électronique suivant la revendication 11, **caractérisé en ce que** la partie (12) de fond est en métal, de préférence en une pièce estampée et pliée.

13. Appareil électronique suivant la revendication 11, **caractérisé en ce que** la partie (11) avant est une partie en matière plastique, notamment une partie moulée par injection.

14. Appareil électronique suivant la revendication 12, **caractérisé en ce qu'**au moins une borne (25) de terre de la plaquette (14) à circuit imprimé de liaison est reliée d'une manière conductrice de l'électricité à la partie (12) métallique de fond.

15. Appareil électronique suivant la revendication 14, **caractérisé en ce qu'**au moins deux bornes (25) de terre reliées électriquement à la partie (12) de fond sont disposées sur des parties opposées de la plaquette (14) à circuit imprimé de liaison.

16. Appareil électronique suivant la revendication 15, **caractérisé en ce qu'**au moins quatre bornes (25) de terre, disposées, de préférence, dans les partis de coin de la plaquette (14) à circuit imprimé de liaison, sont reliées électriquement à la partie (12) de fond.

17. Appareil électronique suivant la revendication 12, **caractérisé en ce que** la partie (12) de fond est constituée d'un seul tenant en pièce estampée et pliée en forme de cuvette, ayant une paroi (71) de fond rectangulaire et quatre parois (74, 75, 76, 77) latérales en saillie allant de la paroi de fond à la partie (11) avant.

18. Appareil électronique suivant la revendication 13, **caractérisé en ce que** la partie (11) avant est constituée d'un seul tenant sous la forme d'un capot en matière plastique en forme de cuvette, qui peut être posé sur la partie (22) de fond et qui comprend la paroi (16) avant, une paroi (17) supérieure et une paroi (18) inférieure et deux parois (19, 20) latérales.

19. Appareil électronique suivant la revendication 2, **caractérisé en ce que** les boîtiers (30) de module sont conformés en pièces en matière plastique en forme de cuvette, notamment en pièces moulées par injection, ayant une paroi (36) avant, une paroi (37) supérieure et une paroi (38) inférieure, deux parois (40, 41) latérales et un côté (39) arrière ouvert.

20. Appareil électronique suivant la revendication 19, **caractérisé en ce qu'**il est prévu sur la paroi (38) inférieure des boîtiers (30) de module au moins une traversée (47) pour un dispositif (46) de mise en contact pour la connexion de liaisons extérieures par câble au blocs (2) de module.

21. Appareil électronique suivant l'une des revendications 12 ou 14 à 17, **caractérisé en ce que** le boîtier de base a des tôles (76, 77) de protection ESD, qui s'étendent dans la partie marginale extérieure de la paroi (16) avant du boîtier (1) de base des côtés de la paroi avant, qui sont éloignés des blocs (2) de module, au moins jusqu'à la face (29) extérieure de la paroi avant.

22. Appareil électronique suivant la revendication 17, **caractérisé en ce qu'**au moins deux parois (76, 77) latérales mutuellement opposées de la partie (12) de fond sont constituées sous la forme de tôles de protection ESD, les extrémités, éloignées de la paroi (71) de fond, des au moins deux parois (76, 77) latérales étant munies de nervures (78) qui passent dans la partie marginale de la paroi (16) avant dans des ouvertures (23) de la partie (11) avant au moins jusqu'à la face (29) extérieure de la paroi avant.

23. Appareil électronique suivant la revendication 19, **caractérisé en ce qu'**à l'intérieur (33) des boîtiers (30) de module en forme de cuvette est disposée une plaquette (34) à circuit imprimé de module reliée électriquement et mécaniquement à la au moins une partie (35) de connecteur et équipée de composants (44) électriques/électroniques, dans lequel il est prévu au moins une saillie (42) qui fait saillie perpendiculairement la paroi (36) avant des boîtiers (30) de module en forme de cuvette à l'intérieur (33) des boîtiers de module et sur laquelle est fixée la au moins une partie (35) de connecteur.

24. Appareil électronique suivant la revendication 23, **caractérisé en ce que** la au moins une saillie (42) passe dans une traversée (43) de la plaquette à circuit imprimé de module.

25. Appareil électronique suivant la revendication 23 ou 24, **caractérisé en ce que** la au moins une partie (35) de connecteur peut être fixée à la au moins une saillie (42) par des moyens de vissage.

26. Appareil électronique suivant la revendication 9, **caractérisé en ce que** sur les parois (40, 41) latérales des boîtiers (30) de module sont constitués des bossages (55, 56) qui sont décalés alternativement et qui, lorsque les boîtiers (30) de module sont juxtaposés latéralement, arrivent en contact avec la paroi latérale d'un boîtier de module directement voisin.

27. Appareil électronique suivant la revendication 19, **caractérisé en ce qu'**il est ménagé dans les parois (40, 41) latérales des boîtiers de module au moins une rainure s'étendant parallèlement à la face (39) arrière des boîtiers de module.

28. Appareil électronique suivant la revendication 18, **caractérisé en ce qu'**il est formé sur au moins une paroi (19, 20) latérale du capot (11) en matière plastique au moins une saillie (53) et/ou une cavité (54) qui peut être couplée à une cavité et/ou à une saillie d'un autre boîtier de base formé de manière correspondante.

29. Appareil électronique suivant la revendication 18, **caractérisé en ce qu'**il est prévu sur la paroi (18) inférieure du capot (11) en matière plastique des ouvertures (64) pour des connexions de câble et/ou des contacts (27) à enficher.

30. Appareil électronique suivant la revendication 18, **caractérisé en ce que** le capot (11) en matière plastique a des traversées (59) de fixation d'un recouvrement de canal de câble ou d'un porte-câble.

31. Appareil électronique suivant la revendication 20 ou 30, **caractérisé en ce que** le capot (11) en matière plastique et/ou les boîtiers (30) de module en matière plastique sont des pièces moulées par injection et **en ce que** les ouvertures (64) ménagées dans le capot (11) en matière plastique en forme de cuvette et/ou les traversées (47) ménagées dans les boîtiers (30) de module en forme de cuvette sont ménagées dans une cuvette (18, 38) inférieure s'étendant de manière inclinée par rapport à la direction de démoulage des pièces moulées par injection.

32. Appareil électronique suivant la revendication 17, **caractérisé en ce qu'**il est formé dans la partie marginale de la paroi (16) de fond des pattes (85) métalliques qui passent dans des évidements (86) de la partie (12) de fond en forme de cuvette et permettent de connecter à la terre la partie de fond sur un câble de terre extérieur.
